# NEUE EUROPÄISCHE PATENTSCHRIFT

(11) **EP 3 149 353 B2**
(45) Veröffentlichungstag und Bekanntmachung des Hinweises auf die Entscheidung über den Einspruch: **08.03.2023**
(45) Hinweis auf die Patenterteilung: 10.07.2019
(21) Anmeldenummer: 15723529.2
(22) Anmeldetag: 20.05.2015
(51) Int. Cl.: F16D 65/56, F16D 65/092, F16D 65/095

(54) **SCHEIBENBREMSE, BREMSSATTEL UND BREMSBELAGSATZ FÜR EINE SCHEIBENBREMSE**
DISK BRAKE, BRAKE CALIPER AND BRAKE PAD SET FOR A DISK BRAKE
FREIN À DISQUE, ÉTRIER DE FREIN ET JEU DE PLAQUETTES DE FREIN POUR UN FREIN À DISQUE

(30) Priorität: 26.05.2014 DE 102014107401
(43) Veröffentlichungstag der Anmeldung: 05.04.2017
(73) Patentinhaber: KNORR-BREMSE Systeme für Nutzfahrzeuge GmbH, 80809 München (DE)
(72) Erfinder: FISCHL, Tobias, 80336 München (DE)
(74) Vertreter: Specht, Peter
(86) Internationale Anmeldenummer: PCT/EP2015/061189
(87) Internationale Veröffentlichungsnummer: WO 2015/181033

(56) Entgegenhaltungen:
- WO-A1-2005/012753
- WO-A1-2013/045556
- DE-A1- 19 712 274
- DE-A1-102005 049 547
- DE-A1-102007 057 992
- DE-A1-102009 009 567
- DE-B3-102005 050 581
- DE-B3-102006 034 766
- JP-A- 2013 087 851
- US-A1- 2013 001 024

## Beschreibung

Die Erfindung betrifft eine Scheibenbremse nach dem Oberbegriff des Anspruchs 1. Die Erfindung bezieht sich auch auf einen Bremssattel und einen Bremsbelagsatz.

Fahrzeuge und bestimmte technische Geräte verwenden häufig Reibungsbremsen, um kinetische Energie umzuwandeln. Bevorzugt wird dabei speziell im Personenkraftwagen- und im Nutzfahrzeugbereich die Scheibenbremse. Bei der typischen Bauform einer Scheibenbremse besteht diese aus einem Bremssattel samt innerer Mechanik, aus in der Regel zwei Bremsbelägen und der Bremsscheibe. Auf die innere Mechanik werden über eine Kraftquelle, z.B. über einen pneumatisch betätigten Zylinder, Kräfte eingeleitet, durch einen Exzentermechanismus verstärkt und als Zuspannkraft über Gewinderohre, die auch Gewindestempel, Gewindespindeln, Druckstempel o.ä. genannt werden, mit Druckstücken auf Bremsbeläge und Bremsscheibe übertragen, wobei über die Gewinderohre der Verschleiß von Bremsscheibe und Bremsbelägen ausgeglichen wird.

Ein Abstand zwischen den Bremsbelägen und der Bremsscheibe wird als Lüftspiel bezeichnet. Verzögerung wird maßgeblich vom Reibwert zwischen Bremsscheibe und Bremsbelag mitbestimmt. Da die Beläge konstruktiv als Verschleißteile ausgelegt werden und die Reibwerte abhängig von der Festigkeit sind, sind diese generell weicher als die Bremsscheibe, d.h. die Beläge erfahren über Ihre Gebrauchsdauer eine Änderung der Belagstärke, sie verschleißen. Infolge dieses Belagverschleißes und zusätzlichem Scheibenverschleiß wird dieses Lüftspiel größer. Aus dieser Belagstärkenänderung ergibt sich die Notwendigkeit, dass eine Verschleißnachstellung die Änderung ausgleicht und somit ein konstantes Luftspiel einstellt.

Ein Beispiel einer Nachstellvorrichtung beschreibt das Dokument DE 10 2004 037 771 A1.

Die Zuspannkräfte wirken über beide Bremsbeläge auf die Bremsscheibe, welche in Abhängigkeit von der Höhe der Zuspannkraft eine Verzögerung der Rotationsbewegung erfährt. Der Bremsbelag, welcher auf der Zuspannseite der Bremsscheibe liegt, wird zuspannseitiger Bremsbelag genannt. Der andere Bremsbelag befindet sich auf der anderen Seite der Bremsscheibe und steht mit einem Sattelrücken des Bremssattels in Kontakt. Bei einem Bremsvorgang wird der zuspannseitige Belag in Richtung auf die Bremsscheibe bewegt. Sobald dieser sich in Kontakt mit der Bremsscheibe befindet, wird der Bremssattel durch die dabei entstehende Gegenkraft mit dem rückenseitigen Bremsbelag in Richtung auf die Bremsscheibe bewegt. Wenn nun der rückenseitige Bremsbelag auch die Bremsscheibe berührt, wird eine Bremswirkung erzeugt.

Der rückenseitige Bremsbelag liegt am Sattelrücken des Bremssattels an einer plangefrästen Fläche an. Diese Fläche hat in etwa die Form des rückenseitigen Bremsbelags. Der zuspannseitige Bremsbelag wird z.B. über zwei Gewinderohreinheiten an die Bremsscheibe gedrückt. Hierbei wird es als nachteilig empfunden, dass hierbei ein ungleicher Verschleiß der Bremsbeläge entstehen kann

Eine Scheibenbremse gemäß dem Oberbegriff des Anspruchs 1 geht z.B. aus DE-B-10 2006 034 766 hervor.

Die Aufgabe der vorliegenden Erfindung besteht daher darin, eine verbesserte Scheibenbremse zu schaffen.

Eine weitere Aufgabe ist es, einen verbesserten Bremssattel bereitzustellen.

Eine noch weitere Aufgabe ist es, einen verbesserten Bremsbelagsatz zu schaffen.

Die Aufgabe wird durch eine Scheibenbremse mit den Merkmalen des Anspruchs 1 gelöst.

Die weitere Aufgabe wird durch einen Bremssattel mit den Merkmalen des Anspruchs 8 gelöst.

Die noch weitere Aufgabe wird durch einen Bremsbelagsatz mit den Merkmalen des Anspruchs 9 gelöst.

Eine erfindungsgemäße Scheibenbremse, vorzugsweise druckluftbetätigt, geht aus Anspruch 1 hervor.

Durch diese Ausbildung, Konfiguration und Anordnung von Anlageflächen zwischen dem rückenseitigen Bremsbelag und dem Sattelrücken des Bremssattels wird ein Ungleichverschleiß der Bremsbeläge bedeutend verringert.

In einer Ausführung korrespondiert der Vorsprung mit der einen Anlagefläche des mindestens einen Paares von Anlageflächen und die Ausnehmung mit der anderen Anlagefläche des mindestens einen Paares von Anlageflächen miteinander und wirken im Einbauzustand formschlüssig miteinander zusammen. Der Vorsprung ist in der Ausnehmung aufgenommen, wodurch der rückenseitige Bremsbelag vorteilhaft an einem Herausdrehen aus dem Bremssattel behindert wird.

Der Vorsprung mit der einen Anlagefläche des mindestens einen Paares von Anlageflächen und die Ausnehmung mit der anderen Anlagefläche des mindestens einen Paares von Anlageflächen können einen kreisrunden Querschnitt aufweisen. Dadurch ist die Ausnehmung einfach herstellbar, z.B. durch Bohren und/oder ausdrehen.

Alternativ können der Vorsprung mit der einen Anlagefläche des mindestens einen Paares von Anlageflächen und die Ausnehmung mit der anderen Anlagefläche des mindestens einen Paares von Anlageflächen einen ovalen oder eckigen Querschnitt aufweisen. Hierbei ergibt sich der Vorteil, dass durch diese eindeutige Zuordnung eine Verwechslungsgefahr verkleinert ist.

In einer weiteren Ausführung ist der Vorsprung mit der einen Anlagefläche des mindestens einen Paares von Anlageflächen an dem Sattelrücken des Bremssattels angeformt, und die Ausnehmung ist mit der anderen Anlagefläche des mindestens einen Paares von Anlageflächen in den Bremsbelagträger des rückenseitigen Bremsbelags eingeformt. Hiermit wird eine Gewichtsersparnis erzielt. Außerdem ist der Herstellungsaufwand der Vorsprünge am Sattelrücken, z.B. durch Fräsarbeiten, im Vergleich zu einer herkömmlichen, plangefrästen Anlagefläche nicht aufwändiger. Der Vorsprung mit der einen Anlagefläche des mindestens einen Paares von Anlageflächen steht an dem Sattelrücken des Bremssattels von einer bearbeiteten Freifläche in Richtung auf die Bremsscheibe hervor. Die hergestellte Freifläche ermöglicht eine Gewichtsersparnis.

Gemäß der Erfindung weist die Scheibenbremse weiterhin eine Zuspannvorrichtung, vorzugsweise mit einem Bremsdrehhebel, und mindestens eine Gewinderohreinheit mit mindestens einem Gewinderohr mit einer Mittelachse auf. Der Vorsprung mit der einen Anlagefläche des mindestens einen Paares von Anlageflächen und die Ausnehmung mit der anderen Anlagefläche des mindestens einen Paares von Anlageflächen sind untereinander koaxial zu ihren Mittellinien und koaxial zu der Mittelachse der mindestens einen Gewinderohreinheit angeordnet. Auf diese Weise entsteht bei einem Bremsvorgang keine ungünstige Hebelwirkung auf den rückenseitigen Bremsbelag, wodurch sich ein Ungleichverschleiß bedeutend verringert.

In noch einer weiteren Ausführung weist die Scheibenbremse eine Nachstelleinrichtung, welche in ein Gewinderohr eingesetzt ist, auf. Damit ist ein kompakter Aufbau ermöglicht.

Ein erfindungsgemäßer Bremssattel der oben beschriebenen Scheibenbremse weist einen Sattelrücken mit einem Querabschnitt auf, der sich parallel zu der Bremsscheibe und rechtwinklig zu der Bremsscheibenachse erstreckt, wobei der Querabschnitt auf der Seite, welche zu der Bremsscheibe weist, einen Anlageabschnittsträger mit mindestens einem als kreiszylinderförmigen Dom ausgebildeten Vorsprung mit der einen Anlagefläche des mindestens einen Paares von Anlageflächen auf.

Ein erfindungsgemäßer Bremsbelagsatz für die oben beschriebene Scheibenbremse weist mindestens einen zuspannseitigen Bremsbelag und mindestens einen rückenseitigen Bremsbelag auf, wobei der rückenseitige Bremsbelag mindestens eine kreiszylinderförmige Ausnehmung zur Aufnahme eines mit der mindestens einen kreiszylinderförmigen Ausnehmung korrespondierenden als kreiszylinderförmigen Dom ausgebildeten Vorsprungs auf.

Der Bremsbelagsatz umfasst weiterhin einen Belaghaltebügel, wobei der mindestens eine zuspannseitige Bremsbelag und der mindestens eine rückenseitige Bremsbelag jeweils mit einer Belaghaltefeder versehen sind. Damit sind ein einfacher Einbau und eine einfache Halterung möglich.

Die Erfindung wird nun anhand einer beispielhaften Ausführung mit Bezug auf die beigefügten Zeichnungen näher erläutert. Hierbei zeigen:
- Fig. 1-1a: schematische Ansichten einer üblichen Scheibenbremse;
- Fig. 2: eine schematische Teilschnittansicht eines üblichen Bremssattels der üblichen Scheibenbremse nach Fig. 2;
- Fig. 3: eine schematische Perspektivansicht eines üblichen Bremsbelags eines üblichen Bremsbelagsatzes der üblichen Scheibenbremse nach Fig. 2;
- Fig. 4: eine schematische Teilschnittansicht eines Ausführungsbeispiels eines erfindungsgemäßen Bremssattels einer erfindungsgemäßen Scheibenbremse;
- Fig. 5: eine schematische Perspektivansicht des Ausführungsbeispiels des erfindungsgemäßen Bremssattels nach Fig. 4;
- Fig. 6: eine schematische Perspektivansicht eines erfindungsgemäßen Bremsbelags; und
- Fig. 7: eine schematische Draufsicht eines Ausführungsbeispiels einer erfindungsgemäßen Scheibenbremse mit dem erfindungsgemäßen Bremssattel nach Fig. 5 und mit einem erfindungsgemäßen Bremsbelagsatz.

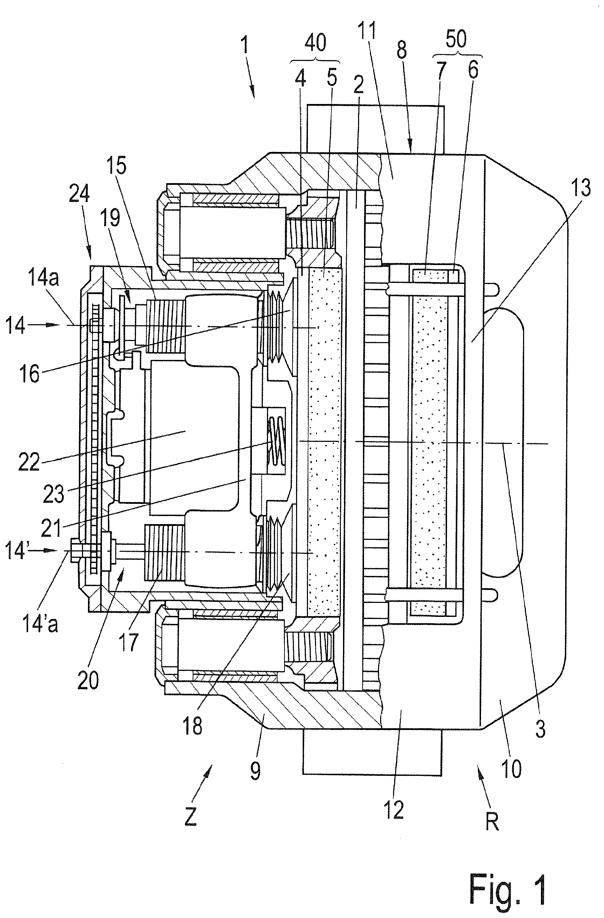

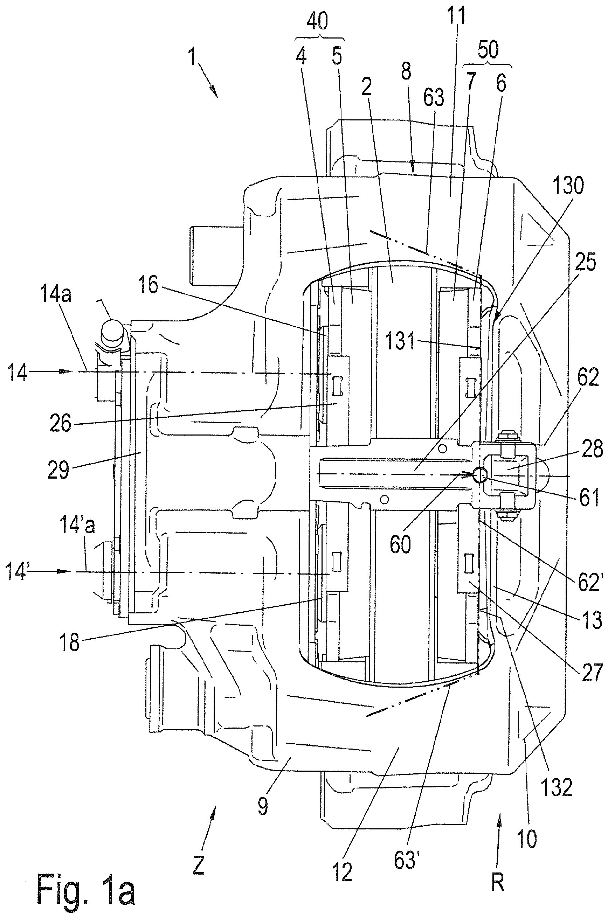

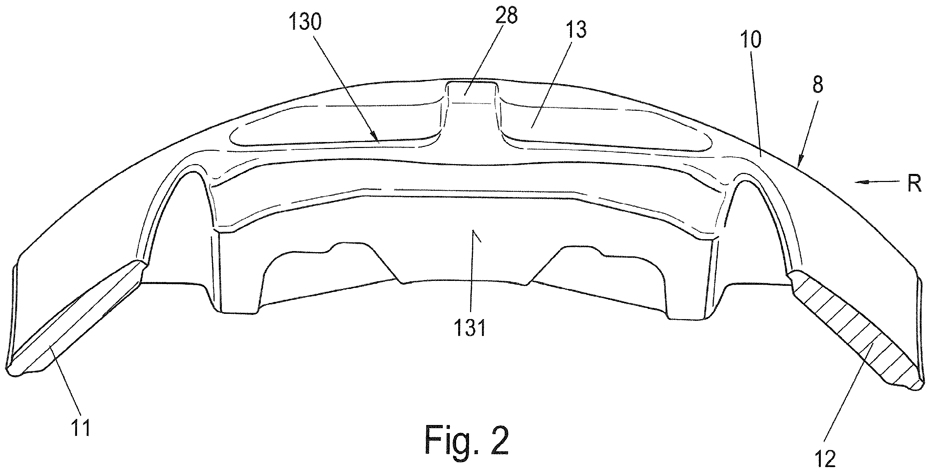

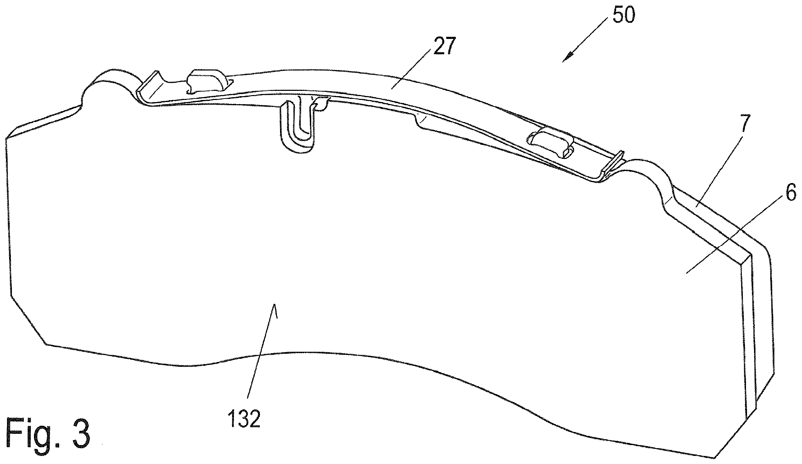

Fig. 1 zeigt eine schematische Teilschnittansicht einer üblichen Scheibenbremse 1 in einer Draufsicht. In Fig. 1a ist eine Draufsicht der üblichen Scheibenbremse 1 dargestellt. Fig. 2 zeigt eine schematische Teilschnittansicht eines üblichen Bremssattels 8 der üblichen Scheibenbremse 1 nach Fig. 2, wobei Fig. 3 eine schematische Perspektivansicht eines üblichen rückenseitigen Bremsbelags 50 eines üblichen Bremsbelagsatzes der üblichen Scheibenbremse 1 nach Fig. 2 darstellt.

Die Scheibenbremse 1 weist eine Bremsscheibe 2 mit einer Bremsscheibenachse 3 auf. Auf einer Zuspannseite Z der Bremsscheibe 2 ist ein zuspannseitiger Bremsbelag 40, der aus einen Bremsbelagträger 4 und einen darauf angebrachten Reibbelag 5 aufweist, angeordnet. Ein weiterer, rückenseitiger Bremsbelag 50 ist auf einer Rückseite R der Bremsscheibe 2 angeordnet. Der rückenseitige Bremsbelag 50 umfasst auch einen Bremsbelagträger 6 und einen darauf angebrachten Reibbelag 7. Diese beiden Bremsbeläge 40 und 50 bilden einen Bremsbelagsatz.

Die Bremsscheibe 2 ist von einem, hier als Schwimmsattel ausgeführten, Bremssattel 8 übergriffen. Der Bremssattel 8 umfasst einen Zuspannabschnitt 9, einen Sattelrücken 10 und zwei Zugstreben 11, 12. Der Zuspannabschnitt 9 befindet sich auf der Zuspannseite Z und nimmt eine Zuspannmechanik der Scheibenbremse 1 auf. Die Zuspannmechanik wird unten noch erläutert. Der Sattelrücken 10 ist auf der Rückenseite R angeordnet. Die Zugstreben 11 und 12 sind über der Bremsscheibe 2 angeordnet und verlaufen parallel zueinander und zu der Bremsscheibenachse 3. Der Zuspannabschnitt 9 und der Sattelrücken 10 sind durch die Zugstreben 11, 12 miteinander fest verbunden und mit diesen z.B. als ein einstückiges Gussteil ausgebildet.

Die Scheibenbremse 1 ist hier als zweistempelige Bremse mit zwei Gewinderohreinheiten 14 und 14' mit jeweils einem Gewinderohr 15, 17 ausgebildet. Die Gewinderohre 15, 17 können auch als Gewindestempel, Gewindespindeln oder Druckspindeln bezeichnet werden. Drehachsen der in der Figur 1 oben angeordneten Gewinderohreinheiten 14, 14' werden hier als Mittelachsen 14a, 14'a bezeichnet.

Der zuspannseitige Bremsbelagträger 4 steht mit den Gewinderohren 15, 17 der Gewinderohreinheiten 14, 14' jeweils über ein Druckstück 16, 18 in Verbindung. Das Druckstück 16 ist an einem Ende des Gewinderohres 15 angebracht, und das Druckstück 18 ist mit einem Ende des Gewinderohres 17 verbunden.

Der rückenseitige Bremsbelag 50 wird auch reaktionsseitiger Bremsbelag 50 genannt und ist mit seinem Bremsbelagträger 6 auf der anderen Seite der Bremsscheibe 2, d.h. auf der Rückenseite, im Bremssattel 8 festgelegt. Dabei steht die Seite des Bremsbelagträgers 6, welche nicht mit dem Reibbelag 7 versehen ist, mit dem Sattelrücken 10 über einen Querabschnitt 13 in Kontakt. Der Querabschnitt 13 erstreckt sich parallel zu der Bremsscheibe 2 und rechtwinklig zu der Bremsscheibenachse 3. Der Querabschnitt 13 ist auf der Seite, welche zu dem Bremsbelagträger 6 des rückenseitigen Bremsbelags 50 weist, mit einem Anlageabschnittsträger 130 versehen, auf welchem eine Anlagefläche 131 (siehe auch Fig. 2) angeordnet ist, die mit einer Anlagefläche 132 (siehe auch Fig. 3) des Bremsbelagträgers 6 des rückenseitigen Bremsbelags 50 in Kontakt steht.

Die Bremsbeläge 40 und 50 sind in nicht gezeigten Aufnahmen geführt und über einen nicht näher beschriebenen Belaghaltebügel 25 gehalten, welcher mit jeweils einer auf der Oberseite eines jeden Bremsbelagträgers 4, 6 angebrachten Belaghaltefeder 26, 27 in Kontakt steht. Dabei ist der Belaghaltebügel 25 mit einem zuspannseitigen Ende in einer nicht bezeichneten Aufnahme am Zuspannabschnitt 9 des Bremssattels 8 gehalten und mit seinem anderen, rückenseitigen Ende an einem Belaghaltebügellager 28 am Sattelrücken 10 des Bremssattels 8 befestig. Dies ist in Fig. 1a dargestellt.

Die Gewinderohre 15, 17 weisen jeweils ein Außengewinde auf und sind jeweils in einer Brücke 21 in zugehörigen Innengewinden verdrehbar angeordnet. Die Brücke 21 wird auch als Traverse bezeichnet.

Die Brücke 21 und somit die Gewinderohre 15, 17 sind von einer Zuspannvorrichtung, hier ein Bremsdrehhebel 22 mit einer Schwenkachse rechtwinklig zu der Bremsscheibenachse 3, betätigbar. Der Bremsdrehhebel 22 weist einen nicht näher bezeichneten Hebelkörper auf, welcher mit der Brücke 21 in Zusammenwirkung steht. Der Bremsdrehhebel 22 steht hier ferner mit einem nicht gezeigten Druckluftzylinder in Wirkverbindung, wobei der Druckluftzylinder an einem Anschlussabschnitt 29 (Fig. 1a) des Bremssattels 8 angebracht ist.

Die Brücke 21 ist in Richtung der Bremsscheibenachse 3 durch den Bremsdrehhebel 22 verstellbar. Eine Bewegung auf die Bremsscheibe 2 wird als Zuspannbewegung bezeichnet, und eine Bewegung in Gegenrichtung wird Lösebewegung genannt. Eine Rückstellfeder 23 ist in der Mitte der Brücke 21 in einer entsprechenden Ausnehmung auf der belagseitigen Seite der Brücke 21 aufgenommen und stützt sich am Bremssattel 8 ab. Mittels der Rückstellfeder 23 wird die Brücke 21 bei der Lösebewegung in die in Fig. 1 und 1a gezeigte gelöste Stellung der Scheibenbremse 1 zurück verstellt.

Die Scheibenbremse 1 kann unterschiedliche Kraftantriebe aufweisen. Der Bremsdrehhebel 22 wird hier z.B. pneumatisch betätigt. Zu Aufbau und Funktion einer pneumatischen Scheibenbremse 1 wird auf die entsprechende Beschreibung der DE 197 29 024 C1 verwiesen.

Ein Abstand zwischen den Reibbelägen 5, 7 und der Bremsscheibe 2 in der gelösten Stellung wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Bremsdrehhebels 22, nicht mehr ausreicht.

In diesem Beispiel ist in der in der Figur 1 gezeigten oberen Gewinderohreinheit 14 in dem Gewinderohr 15 eine Nachstelleinrichtung 19 koaxial mit der Mittelachse 14a eingesetzt. Unter dem Begriff "Nachstellung" ist eine Lüftspielverkleinerung zu verstehen. Das vorher festgelegte Lüftspiel ist durch die Geometrie der Scheibenbremse 1 bestimmt und weist ein so genanntes konstruktives Lüftspiel auf. Mit anderen Worten, die Nachstelleinrichtung 19 verkleinert ein vorhandenes Lüftspiel, wenn dieses in Bezug auf das vorher festgelegte Lüftspiel zu groß ist, auf den Sollwert des vorher festgelegten Lüftspiels. Eine ausführliche Beschreibung einer solchen Nachstelleinrichtung 19 kann dem Dokument DE 10 2004 037 771 A1 entnommen werden.

Die untere Gewinderohreinheit 14' ist mit einem Mitnehmer 20 versehen, welcher koaxial zu der unteren Gewinderohreinheit 14', zu deren Gewinderohr 17 und der Mitnehmerachse 14'a angeordnet ist. Der Mitnehmer 20 ist hier in das Gewinderohr 17 eingesetzt und steht mit diesem in Wirkverbindung.

Die Mittelachsen 14a, 14'a und die Bremsscheibenachse 3 sind parallel zueinander angeordnet.

Die Nachstelleinrichtung 19 steht über einen nicht näher bezeichneten Antrieb mit dem Bremsdrehhebel 22 in Zusammenwirkung.

Die Nachstelleinrichtung 19 und der Mitnehmer 20 sind durch eine Synchronisationseinheit 24 derart gekoppelt, dass eine Verdrehbewegung des Gewinderohrs 15 um seine Mittelachse 14a eine Verdrehbewegung des Gewinderohrs 17 um dessen Mittelachse 14'a bewirkt und umgekehrt. Die Synchronisationseinheit 24 wird hier nicht weiter erläutert. Mit ihr ist eine synchrone Bewegung der Gewinderohre 15 und 17 der Gewinderohreinheiten 14 und 14' bei Nachstellvorgängen (und evtl. Rückstellvorgängen, je nach der Art der Nachstelleinrichtung 19, die auch zur Vergrößerung eines Lüftspiels ausgestaltet sein kann) und Einstellungen bei Wartungsarbeiten, z.B. Bremsbelagwechsel, (manueller Antrieb z.B. über ein Betätigungsende des Mitnehmers 20 oder/und einen Antriebsabschnitt der Nachstelleinrichtung 19 gewährleistet.

Beim Betätigen der Scheibenbremse 1 wird die benötigte Zuspannkraft über den exzentrisch zu den Gewinderohreinheiten 14, 14' gelagerten Bremsdrehhebel 22 erzeugt und auf die Brücke 21 übertragen. Die so auf die Brücke 21 übertragene Zuspannkraft wird dann durch die beiden Gewinderohreinheiten 14, 14', deren Gewinderohre 15, 17 mit den Druckstücken 16, 18 auf den Bremsbelagträger 4 des zuspannseitigen Bremsbelags 40 und über den Bremssattel 8 auch auf den Bremsbelagträger 6 des rückenseitigen Bremsbelags 50 und dann auf die Bremsscheibe 2 übertragen. Bei diesem Vorgang werden die Gewinderohreinheiten 14, 14' in Richtung auf die Bremsscheibe 2 zubewegt. Sobald der zuspannseitige Bremsbelag 40 mit seinem Reibbelag 5 in Kontakt mit der Bremsscheibe 2 befindet, wird durch die entstehende Gegenkraft der Bremssattel 8 mit dem rückenseitigen Bremsbelag 50 auch in Richtung auf die Bremsscheibe 2 entgegengesetzt zu der Richtung des zuspannseitigen Bremsbelags 40 zubewegt. Sobald auch der Reibbelag 7 des rückenseitigen Bremsbelags 50 die Bremsscheibe 2 berührt, wird eine Bremswirkung erzeugt.

Der rückenseitige Bremsbelag 50 liegt mit seiner Anlagefläche 132 an der Anlagefläche 131 des Anlageabschnittsträgers 130 des Querabschnitts 13 des Sattelrückens 10 des Bremssattels 8 an. Der rückenseitige Bremsbelag 50 ist in Fig. 3 mit Ansicht seiner Anlagefläche 132 gezeigt. Die Anlagefläche 132 ist an der hier deutlich zu erkennenden Außenseite des Bremsbelagträgers 6 des rückenseitigen Bremsbelags 50 angeordnet. Auf der Oberseite des Bremsbelagträgers 6 ist die nicht näher erläuterte Belaghaltefeder 27 angebracht.

Die Anlagefläche 131 des Sattelrückens 10 ist spanabhebend, z.B. gefräst, hergestellt. Diese Anlagefläche 131 ist in Fig. 2 deutlich zu erkennen und weist in etwa die Form des Bremsbelagträgers 6 des rückenseitigen Bremsbelags 50 auf. Hierbei gibt es eine ganzflächige Anlage der Anlageflächen 131 und 132. Im Gegensatz dazu steht der zuspannseitige Bremsbelag 40 mit seinem Bremsbelagträger 4 mit den in einem Abstand zueinander angeordneten Druckstücken 16, 18 der Gewinderohreinheiten 14, 14' in Kontakt. Bei einem Zuspannvorgang verlaufen gedachte Krafteinleitungslinien in Richtung der Mittelachsen 14a, 14'a parallel beidseitig in einem Abstand zur Bremsscheibenachse 3.

Dabei wird durch die ganzflächige Auflage des rückenseitigen Bremsbelags 50 an dem Anlageabschnittsträger 130 des Querabschnitts 13 am Sattelrücken 10 des Bremssattels 8 eine sehr ungünstige Hebelwirkung bei der Krafteinleitung erzeugt. Hierzu ist ein Angriffspunkt 61 der Krafteinleitung mit einem Pfeil, der eine Gegenkraft 60 des rückenseitigen Bremsbelags 50 andeuten soll, in Fig. 1a eingezeichnet. Zwei Hebelarme 62, 62' sind jeweils durch eine strichdoppelpunktierte Linie längs der Kontaktstelle der Anlageflächen 131 und 132 dargestellt. Die beiden Hebelarme 62, 62' treffen sich in dem Angriffspunkt 61, welcher direkt in einer senkrecht zur Zeichenebene verlaufenden Vertikalebene der Bremsscheibenachse 3 liegt. Die äußeren Enden der Hebelarme 62, 62' sind jeweils mit einer ebenfalls strichdoppelpunktierten Linie verbunden, welche jeweils eine durch die Zugstreben 11, 12 verlaufende Zugkraftrichtung 63, 63' symbolisiert. Die Länge eines jeden Hebelarms 62, 62' entspricht in etwa der halben Länge des Querabschnitts 13 des Sattelrückens 10.

Es ist in Fig. 1a deutlich zu erkennen, dass die Krafteinleitungslinien auf den zuspannseitigen Bremsbelag 40 in der jeweiligen Mittelachse 14a und 14'a verlaufen, wohingegen der Angriffspunkt 61 beim rückenseitigen Bremsbelag 50 in der Mitte zwischen den Mittelachsen 14a und 14'a liegt.

Daher können diese beiden unterschiedlichen Krafteinleitungsformen einen Ungleichverschleiß der Bremsbeläge 40, 50 negativ beeinflussen.

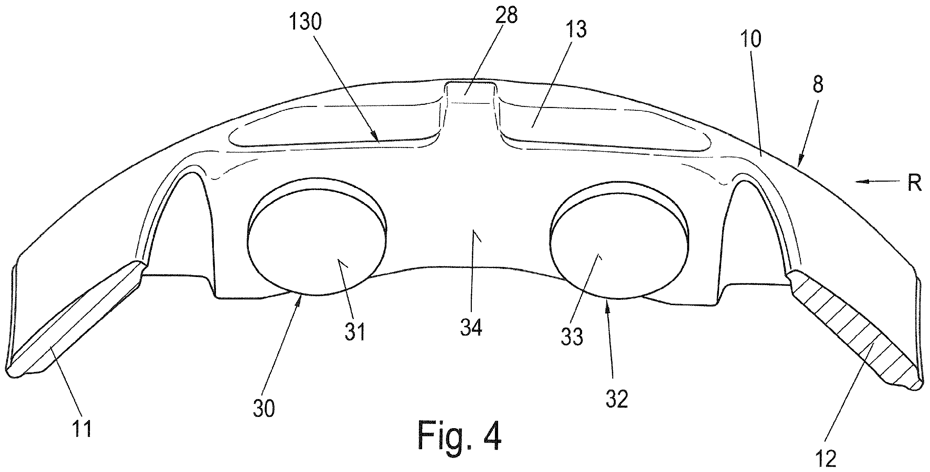

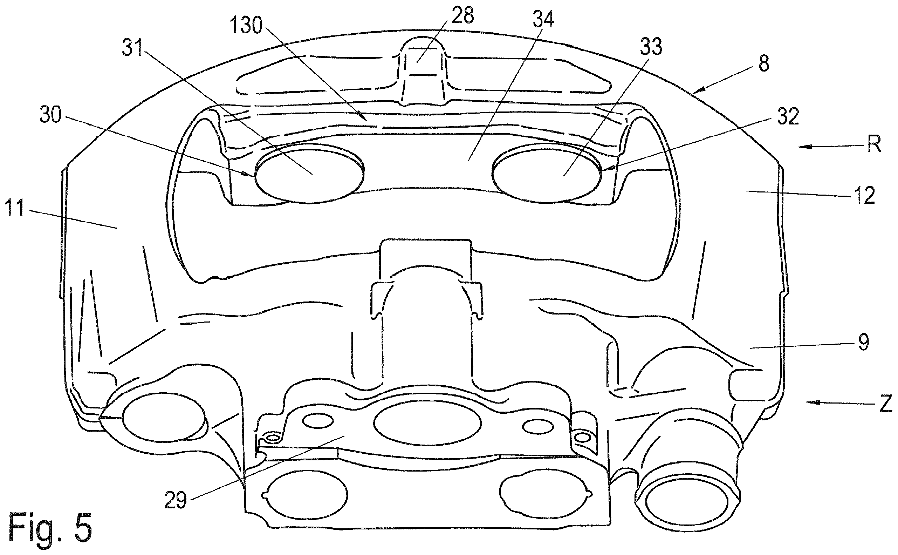

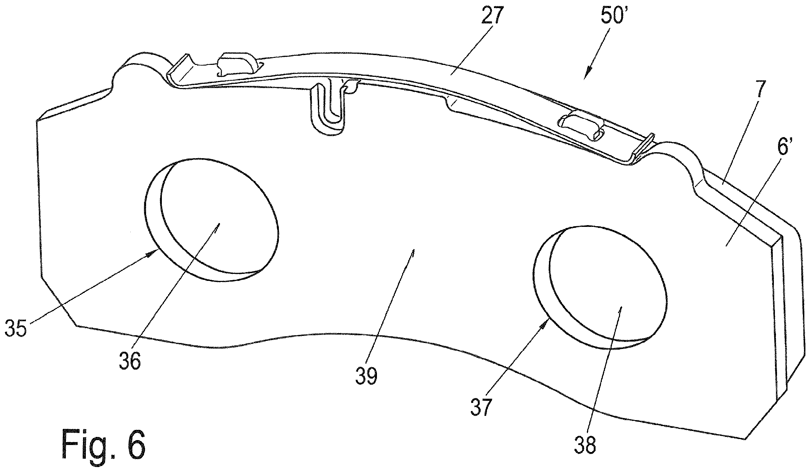

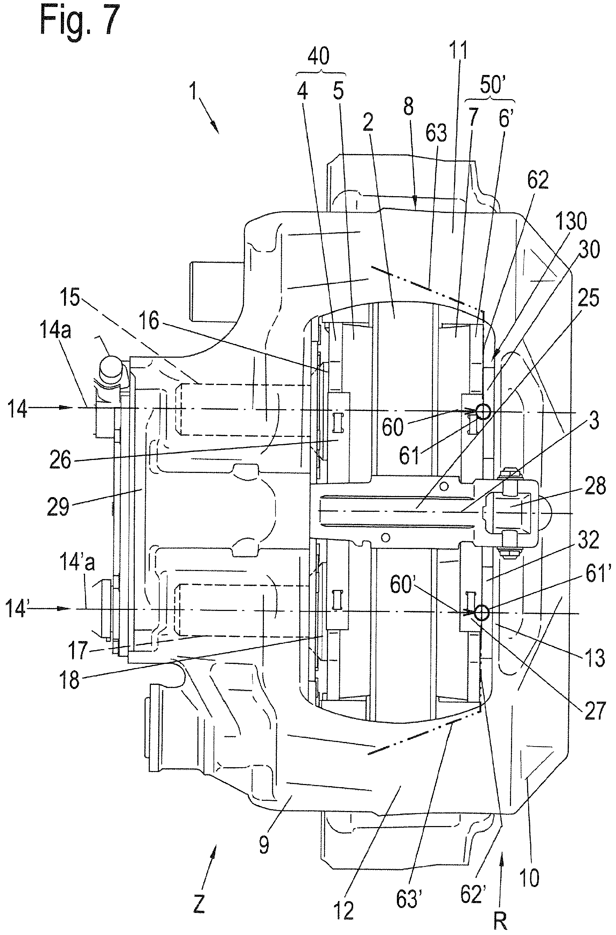

In Fig. 4 ist eine schematische Teilschnittansicht eines Ausführungsbeispiels eines erfindungsgemäßen Bremssattels 8 einer erfindungsgemäßen Scheibenbremse 1 dargestellt. Fig. 5 zeigt eine schematische Perspektivansicht des Ausführungsbeispiels des erfindungsgemäßen Bremssattels 8 nach Fig. 4, und in Fig. 6 ist eine schematische Perspektivansicht eines erfindungsgemäßen Bremsbelags 50' gezeigt. Schließlich zeigt Fig. 7 eine schematische Draufsicht eines Ausführungsbeispiels einer erfindungsgemäßen Scheibenbremse 1 mit dem erfindungsgemäßen Bremssattel 8 nach Fig. 5 und mit einem erfindungsgemäßen Bremsbelagsatz mit den Bremsbelägen 40 und 50'.

Im Gegensatz zu dem Sattelrücken 10 des üblichen Bremssattels 8 nach Fig. 2 weist der Sattelrücken 10 des erfindungsgemäßen Bremssattels 8 nach Fig. 4 den Querabschnitt 13 mit dem Anlageabschnittsträger 130 mit zwei Vorsprüngen 30, 32 auf, welche in Richtung auf die Bremsscheibe 2 von einer Freifläche 34 hervorstehen. Diese Vorsprünge 30, 32 sind hier aus dem Anlageabschnittsträger 130 z.B. heraus gefräst, indem in diesem Beispiel die Freifläche 34 in Richtung der Bremsscheibenachse 3 von der Bremsscheibe 2 weg nach außen spanabhebend erstellt worden ist. Im Gegensatz zu dem üblichen Sattelrücken 10 nach Fig. 2 ist bildet die Freifläche 34 keine Anlagefläche für den rückenseitigen Bremsbelag 50'.

Die Vorsprünge 30, 32 weisen an ihren zur Bremsscheibe 2 weisenden Stirnseiten jeweils eine Anlagefläche 31, 33 auf. Diese beiden Anlageflächen 31, 33 liegen zusammen in einer Ebene. In diesem Ausführungsbeispiel sind die Vorsprünge 30, 32 kreiszylinderförmige Dome und die Anlageflächen 31, 33 als Kreisflächen ausgebildet. Die Vorsprünge 30, 32 sind zur Bremsscheibenachse 3 beidseitig mit gleichem Abstand angeordnet. Außerdem verlaufen die Mittellinien der kreisförmigen Anlageflächen 31, 33 jeweils koaxial zu die Mittelachsen 14a, 14'a der Gewinderohreinheiten 14, 14' der Zuspannseite. Dies ist in Fig. 7 deutlich zu erkennen. Mit anderen Worten, die Mittellinie der Gewinderohreinheit 14 ist die Mittelachse 14a und verläuft sowohl als Mittellinie durch das Druckstück 16 des zuspannseitigen Bremsbelags 40 als auch als Mittellinie durch den Mittelpunkt der kreisförmigen Anlagefläche 31 des Vorsprungs 30 des Sattelrückens 10. Und die Mittellinie der Gewinderohreinheit 14' verläuft als Mittelachse 14'a sowohl als Mittellinie durch das Druckstücke 18 des zuspannseitigen Bremsbelags 40 als auch als Mittellinie durch den Mittelpunkt der kreisförmigen Anlagefläche 33 des Vorsprungs 32 des Sattelrückens 10.

Fig. 6 zeigt den zugehörigen rückenseitigen Bremsbelag 50' mit dem Bremsbelagträger 6' und dem Reibbelag 7. Die äußere Rückenseite des Bremsbelagträgers 6' weist eine Freifläche 39 auf, die jedoch im Gegensatz zu dem üblichen Bremsbelag nach Fig. 3 keine Anlagefläche für den Sattelrücken 10 des Bremssattels 8 bildet. In dieser Freifläche 39 sind in diesem Beispiel kreiszylinderförmige Ausnehmungen 35, 37 mit jeweils einer kreisförmigen Anlagefläche 36, 38, die jeweils eine Bodenfläche einer solchen Ausnehmung 35, 37 bildet, eingeformt. Die kreiszylinderförmigen Ausnehmungen 35, 37 korrespondieren mit den kreiszylinderförmigen Vorsprüngen 30, 32 des Sattelrückens 10 nach Fig. 4 und 5.

Im eingebauten Zustand sind die kreiszylinderförmigen Vorsprünge 30, 32 des Sattelrückens 10 des Bremssattels 8 in den kreiszylinderförmigen Ausnehmungen 35, 37 des Bremsbelagträgers 6' des rückenseitigen Bremsbelags 50' formschlüssig aufgenommen. Dabei berühren sich die Freifläche 39 des Bremsbelagträgers 6' des rückenseitigen Bremsbelags 50' und die Freifläche 34 des Anlageabschnittsträgers 130 des Sattelrückens 10 nicht und können auch nicht in Kontakt kommen. Dies ist auch in Fig. 7 zu erkennen.

Die Freiflächen 34, 39 ermöglichen zudem eine Gewichtsreduzierung des Bremssattels 8 wie auch der gesamten Scheibenbremse 1.

Der rückenseitige Bremsbelag 50' weist die Belaghaltefeder 27 auf der Oberseite des Bremsbelagträgers 6' auf. Der Reibbelag 7 ist auf der Seite des Bremsbelagträgers 6' aufgebracht, welcher der äußeren Rückenseite mit den Ausnehmungen 35, 37 des Bremsbelagträgers 6' gegenüberliegt.

Die Freifläche 34 des Anlageabschnittsträgers 130 des Sattelrückens 10 ist plangefräst, wobei der Aufwand der spanabhebenden Bearbeitung zu dem üblichen Anlageabschnittsträger 130 des üblichen Sattelrückens 10 nach Fig. 2 unverändert bleibt.

In dem zusammengebauten Zustand der Scheibenbremse 1, welcher in Fig. 7 gezeigt ist, sind die Vorsprünge 30, 31 des Sattelrückens 10 des Bremssattels 8 in den Ausnehmungen 35, 37 des Bremsbelagträgers 6' des rückenseitigen Bremsbelags 50' aufgenommen. Dabei steht die kreisförmige Anlagefläche 31 des Vorsprungs 30 des Sattelrückens 10 mit der kreisförmigen Anlagefläche 38 der Ausnehmung 37 des Bremsbelagträgers 6' des rückenseitigen Bremsbelags 50' in Kontakt. Ebenso steht auch die kreisförmige Anlagefläche 33 des Vorsprungs 32 des Sattelrückens 10 mit der kreisförmigen Anlagefläche 36 der Ausnehmung 35 des Bremsbelagträgers 6' des rückenseitigen Bremsbelags 50' in Kontakt.

Auf diese Weise wird das Anpressverhalten des rückenseitigen Bremsbelags 50' und des zuspannseitigen Bremsbelags 40 angeglichen, da die gedachten Krafteinleitungslinien beim rückenseitigen Bremsbelag 50 mit den Mittellinien 14a, 14'a und somit mit den gedachten Krafteinleitungslinien der Gewinderohreinheiten 14, 14' bei dem zuspannseitigen Bremsbelag 40 fluchten und übereinstimmen.

Hierzu sind in Fig. 7 die Hebelarme 62, 62' mit ihren Zugkraftrichtungen 63, 63' eingezeichnet. Es ist deutlich zu erkennen, dass im Gegensatz zu den Hebelarmen 62, 62' bei der üblichen Scheibenbremse 1 nach Fig. 1a nun bei der in Fig. 7 gezeigten erfindungsgemäßen Scheibenbremse 1 zwei Angriffspunkte 61 und 61' mit jeweils einer zugehörigen Gegenkraft 60, 60' an dem rückenseitigen Bremsbelag 50 vorhanden sind. Daraus resultieren weiterhin im Vergleich zu der üblichen Scheibenbremse 1 nach Fig. 1a nun kürzere Hebelarme 62, 62', die jeweils in etwa halbiert sind. Dies wirkt sich positiv auf die hoch belasteten Zugstreben 11, 12 aus.

Zudem wird durch die in den Ausnehmungen 35, 37 des Bremsbelagträgers 6' des rückenseitigen Bremsbelags 50' formschlüssig aufgenommenen Vorsprünge 30, 32 des Sattelrückens 10 ein Herausdrehen des rückenseitigen Bremsbelags 50' verhindert.

Ein erfindungsgemäßer Bremsbelagsatz der erfindungsgemäßen Scheibenbremse 1 nach Fig. 7 umfasst den zuspannseitigen Bremsbelag 40 und den rückenseitigen Bremsbelag 50', welcher den Bremsbelagträger 6' mit den Ausnehmungen 35, 37 für die Vorsprünge 30, 32 des Sattelrückens 10 aufweist. Dadurch sind die Bremsbeläge 40, 50' verwechslungsfrei einbaubar. Dies wird dadurch gewährleistet, dass die Außendurchmesser der Druckstücke 16, 18 größer als die Außendurchmesser der Ausnehmungen 35, 37 sind.

Die oben beschriebenen Ausführungsbeispiele schränken die Erfindung nicht ein. Sie ist im Rahmen der beigefügten Ansprüche modifizierbar.

So kann z.B. die Gestalt der Vorsprünge 30, 32 und Ausnehmungen 35, 37 anstelle eines kreisrunden Querschnitts quer zur Mittellinie einen ovalen oder/und eckigen Querschnitt aufweisen. Im Fall von zwei oder mehr Vorsprüngen 30, 32 mit entsprechender Anzahl von Ausnehmungen 35, 37 kann es möglich sein, dass diese Querschnitte aller Vorsprünge 30, 32 und Ausnehmungen 35, 37 gleiche oder unterschiedliche Gestalt aufweisen, z.B. sind die Querschnitte von Vorsprung 30 und Ausnehmung 37 kreisrund und von Vorsprung 32 und Ausnehmung 35 oval.

Es ist auch denkbar, dass der Bremsbelagträger 4 des zuspannseitigen Bremsbelags 40 mit Ausnehmungen für die Druckstücke 16, 18 versehen ist. Dabei können die Druckstücke 16, 18 und die Vorsprünge 30, 32 unterschiedliche Durchmesser und/oder Gestalten zum verwechslungsfreien Einbau der Bremsbeläge 40, 50' aufweisen.

Die Vorsprünge 30, 32 und die zugehörigen Ausnehmungen 35, 37 können auch in umgekehrter Weise angeordnet sein, d.h. die Vorsprünge 30, 32 sind auf dem Bremsbelagträger 6' angeordnet, wohingegen die Ausnehmungen 35, 37 in den Sattelrücken 10 des Bremssattels 8 eingeformt sind. Es ist auch eine Kombination von einem Vorsprung 30 und einer Ausnehmung 37 an dem Bremsbelagträger 6' denkbar, wobei die zugehörige Kombination von Vorsprung 31 und Ausnehmung 35 an dem Sattelrücken 10 angeordnet ist.

Es ist weiterhin denkbar, dass in dem Fall einer einstempeligen Scheibenbremse mit nur einer Gewinderohreinheit 14, 14', die zentral, d.h. über der Bremsscheibenachse 3 in einer Vertikalebene der Bremsscheibenachse 3 (die gedachte senkrecht auf der Zeichnung der Fig. 7 stehende Vertikalebene der Bremsscheibenachse 3), angeordnet ist, der zugehörige Anlageabschnittsträger 130 des Sattelrückens 10 des Bremssattels 8 auch nur einen Vorsprung 30, 32 mit einer Anlagefläche 31, 33 aufweist. Hierzu ist der zugehörige Bremsbelagträger 6' des rückenseitigen Bremsbelags 50 mit nur einer zentralen Ausnehmung 35, 37 mit einer Anlagefläche 36, 38 versehen. Die Mittellinie der nur einen Gewinderohreinheit 14, 14' verläuft dann durch die Mittellinie der nur einen Anlagefläche 31, 33 des Sattelrückens 10.

### Bezugszeichenliste

- 1: Scheibenbremse
- 2: Bremsscheibe
- 3: Bremscheibenachse
- 4, 6: Bremsbelagträger
- 5, 7: Reibbelag
- 8: Bremssattel
- 9: Zuspannabschnitt
- 10: Sattelrücken
- 11, 12: Zugstrebe
- 13: Querabschnitt
- 14, 14': Gewinderohreinheit
- 14a, 14'a: Mittelachse
- 15, 17: Gewinderohr
- 16, 18: Druckstück
- 19: Nachstelleinrichtung
- 20: Mitnehmer
- 21: Brücke
- 22: Bremsdrehhebel
- 23: Rückstellfeder
- 24: Synchronisationseinheit
- 25: Belaghaltebügel
- 26, 27: Belaghaltefeder
- 28: Belaghaltebügellager
- 29: Anschlussabschnitt
- 30, 32: Vorsprung
- 31, 33: Anlagefläche
- 34: Freifläche
- 35, 37: Ausnehmung
- 36, 38: Anlagefläche
- 39: Freifläche
- 40: Zuspannseitiger Bremsbelag
- 50, 50': Rückenseitiger Bremsbelag
- 60, 60': Gegenkraft
- 61, 61': Angriffspunkt
- 62, 62': Hebelarm
- 63, 63': Zugkraftrichtung
- 130: Anlageabschnittsträger
- 131, 132: Anlagefläche

- R: Rückenseite
- Z: Zuspannseite

## Patentansprüche

1. Scheibenbremse (1), vorzugsweise druckluftbetätigt, insbesondere für ein Kraftfahrzeug, aufweisend eine Bremsscheibe (2) mit einer Bremsscheibenachse (3), einen Bremssattel (8), insbesondere ein Schiebesattel, mit einem Zuspannabschnitt (9) und einem Sattelrücken (10), welche über Zugstreben (11, 12) verbunden sind, , weiterhin aufweisend eine Zuspannvorrichtung, vor zugsweise mit einem Bremsdrehhebel (22), und mindestens eine Gewinderohreinheit (14, 14') mit (mindestens einem Gewinderohr (15, 16) mit einer Mittelachse (14a, 14'a), mindestens zwei Bremsbeläge (40, 50, 50') mit jeweils einem Bremsbelagträger (4, 6, 6'), wobei von den Bremsbelägen (40, 50, 50') ein zuspannseitiger Bremsbelag (40) dem Zuspannabschnitt (9) zugeordnet ist, und ein rückenseitiger Bremsbelag (50, 50') dem Sattelrücken (10) zugeordnet ist, wobei der Bremsbelagträger (6, 6') des rückenseitigen Bremsbelags (50, 50') und der Sattelrücken (10) des Bremssattels (8) über mindestens ein Paar von Anlageflächen (31, 33; 36, 38; 131, 132) in Kontakt stehen, wobei die eine Anlagefläche (31, 33) des mindestens einen Paares von Anlageflächen (31, 33; 36, 38) eine Stirnfläche eines Vorsprungs (30, 32) ist, und dass die andere Anlagefläche (36, 38) des mindestens einen Paares von Anlageflächen (31, 33; 36, 38) eine Bodenfläche einer Ausnehmung (35, 37) ist, **dadurch gekennzeichnet, dass**
der Vorsprung (30, 32) mit der einen Anlagefläche (31, 33) des mindestens einen Paares von Anlageflächen (31, 33; 36, 38) und die Ausnehmung (35, 37) mit der anderen Anlagefläche (36, 38) des mindestens einen Paares von Anlageflächen (31, 33; '36, 38) untereinander koaxial zu ihren Mittellinien und koaxial zu der Mittelachse (14a, 14'a) der mindestens einen Gewinderohreinheit (14, 14') angeordnet sind, und dass
der Vorsprung (30, 32) mit der einen Anlagefläche (31, 33) des mindestens einen Paares von Anlageflächen (31, 33; 36, 38) von einer Freifläche (34) des Sattelrückens (10) hervorsteht, wobei die Freifläche (34) keine Anlagefläche für den rückenseitigen Bremsbelag (50') bildet.

2. Scheibenbremse (1) nach Anspruch 1 **dadurch gekennzeichnet, dass** der Vorsprung (30, 32) mit der einen Anlagefläche (31, 33) des mindestens einen Paares von Anlageflächen (31, 33; 36, 38) und die Ausnehmung (35, 37) mit der anderen Anlagefläche (36, 38) des mindestens einen Paares von Anlageflächen (31, 33; 36, 38) miteinander korrespondieren und im Einbauzustand formschlüssig miteinander zusammenwirken.

3. Scheibenbremse (1) nach Anspruch 1 oder 2, **dadurch gekennzeichnet, dass** der Vorsprung (30, 32) mit der einen Anlagefläche (31, 33) des mindestens einen Paares von Anlageflächen (31, 33; 36, 38) und die Ausnehmung (35, 37) mit der anderen Anlagefläche (36, 38) des mindestens einen Paares von Anlageflächen (31, 33; 36, 38) einen kreisrunden Querschnitt aufweisen.

4. Scheibenbremse (1) nach Anspruch 1 oder 2, **dadurch gekennzeichnet, dass** der Vorsprung (30, 32) mit der einen Anlagefläche (31, 33) des mindestens einen Paares von Anlageflächen (31, 33; 36, 38) und die Ausnehmung (35, 37) mit der anderen Anlagefläche (36, 38) des mindestens einen Paares von Anlageflächen (31, 33; 36, 38) einen ovalen oder eckigen Querschnitt aufweisen.

5. Scheibenbremse (1) nach einem der vorhergehenden Ansprüche, **dadurch gekennzeichnet, dass** der Vorsprung (30, 32) mit der einen Anlagefläche (31, 33) des mindestens einen Paares von Anlageflächen (31, 33; 36, 38) an dem Sattelrücken (10) des Bremssattels (8) angeformt ist, und dass die Ausnehmung (35, 37) mit der anderen Anlagefläche (36, 38) des mindestens einen Paares von Anlageflächen (31, 33; 36, 38) in den Bremsbelagträger (6') des rückenseitigen Bremsbelags (50') eingeformt ist.

6. Scheibenbremse (1) nach Anspruch 5, **dadurch gekennzeichnet, dass** der Vorsprung (30, 32) mit der einen Anlagefläche (31, 33) des mindestens einen Paares von Anlageflächen (31, 33; 36, 38) an dem Sattelrücken (10) des Bremssattels (8) von einer bearbeiteten Freifläche (34) in Richtung auf die Bremsscheibe (2) hervorsteht.

7. Scheibenbremse (1) nach einem der vorhergehenden Ansprüche, weiterhin aufweisend eine Nachstelleinrichtung (19), welche in ein Gewinderohr (15, 17) eingesetzt ist.

8. Bremssattel (8) einer Scheibenbremse (1) nach einem der vorhergehenden Ansprüche, **dadurch gekennzeichnet, dass** der Sattelrücken (10) des Bremssattels (8) einen Querabschnitt (13), der sich parallel zu der Bremsscheibe (2) und rechtwinklig zu der Bremsscheibenachse (3) erstreckt, aufweist, wobei der Querabschnitt (13) auf der Seite, welche zu der Bremsscheibe (2) weist, einen Anlageabschnittsträger (130) mit mindestens einem als kreiszylinderförmigen Dom ausgebildeten Vorsprung (30, 32) mit der einen Anlagefläche (31, 33) des mindestens einen Paares von Anlageflächen (31, 33; 36, 38) aufweist.

9. Bremsbelagsatz einer Scheibenbremse (1) nach einem der Ansprüche 1 bis 7, aufweisend mindestens einen zuspannseitigen Bremsbelag (40) und mindestens einen rückenseitigen Bremsbelag (50'), wobei der rückenseitige Bremsbelag (50') mindestens eine kreiszylinderförmige Ausnehmung (35, 37) zur Aufnahme eines mit der mindestens einen kreiszylinderförmigen Ausnehmung (35, 37) korrespondierenden als kreiszylinderförmigen Dom ausgebildeten Vorsprungs (30, 31) aufweist,
wobei der Bremsbelagsatz weiterhin einen Belaghaltebügel (25) umfasst, wobei der mindestens eine zuspannseitige Bremsbelag (40) und der mindestens eine rückenseitige Bremsbelag (50') jeweils mit einer Belaghaltefeder (26, 27) versehen sind.

## Claims

1. A disc brake (1), preferably compressed-air actuated, in particular for a motor vehicle, having a brake disc (2) with a brake disc axis (2), a brake calliper (8), in particular a sliding calliper, with an application portion (9) and a calliper back (10) that are connected via tension struts (11, 12), further having an application device, preferably with a pivoted brake lever (22), and at least one threaded tube unit (14, 14') having at least one threaded tube unit (15, 16) having a centre axis (14a, 14'a), at least two brake pads (40, 50, 50'), each having a brake pad carrier (4, 6, 6'), an application-side brake pad (40) of these brake pads (40, 50, 50') being assigned to the application portion (9), and a back-side brake pad (50, 50') being assigned to the calliper back (10), the brake pad carrier (6, 6') of the back-side brake pad (50, 50') and the calliper back (10) of the brake calliper (8) being in contact with one another via at least one pair of contact surfaces (31, 33; 36, 38; 131, 132) of, one contract surface (31, 33) of the at least one pair of contact surfaces (31, 33; 36, 38) being a front face of a projection (30, 32), and the other contact surface (36, 38) of the least one pair of contact surfaces (31, 33; 36, 38) being a base surface of a recess (35, 37),
**characterised in that**
the projection (30, 32) having one contact surface (31, 33) of the at least one pair of contact surfaces (31, 33; 36, 38) and the recess (35, 37) having the other contact surface (36, 38) of the at least one pair of contact surfaces (31, 33; 36, 38) are arranged coaxially with their centre lines and coaxially with the centre axis (14a, 14'a) of the last least one threaded tube unit (14, 14') in relation to one another, and that
the projection (30, 32) having one contact surface (31, 33) of the at least one pair of contact surfaces (31, 33; 36, 38) projects from a free surface (34) of the calliper back (10), this free surface (34) not forming a contact surface for the back-side brake pad (50').

2. A disc brake (1) according to claim 1 **characterised in that** the projection (30, 32) having one contact surface (31, 33) of the at least one pair of contact surfaces (31, 33; 36, 38) and the recess (35, 37) having the other contact surface (36, 38) of the at least one pair of contact surfaces (31, 33; 36, 38) correspond to one another and cooperate with one another in an form-fit when mounted.

3. A disc brake (1) according to claim 1 or 2, **characterised in that** the projection (30, 32) having one contact surface (31, 33) of the at least one pair of contact surfaces (31, 33; 36, 38) and the recess (35, 37) having the other contact surface (36, 38) of the at least one pair of contact surfaces (31, 33; 36, 38) have circular cross sections.

4. A disc brake (1) according to claim 1 or 2, **characterised in that** the projection (30, 32) having one contact surface (31, 33) of the at least one pair of contact surfaces (31, 33; 36, 38) and the recess (35, 37) having the other contact surface (36, 38) of the at least one pair of contact surfaces (31, 33; 36, 38) have oval or angular cross sections.

5. A disc brake (1) according to any one of the preceding claims, **characterised in that** the projection (30, 32) having one contact surface (31, 33) of the at least one pair of contact surfaces (31, 33; 36, 38) is integrally formed on the calliper back (10) of the brake calliper (8), and that the recess having the other contact surface (36, 38) of the at least one pair of contact surfaces (31, 33; 36, 38) is integrally formed in the brake pad carrier (6') of the back-side brake pad (50').

6. A disc brake (1) according to claim 5, **characterised in that** the projection (30, 32) having one contact surface (31, 33) of the at least one pair of contact surfaces (31, 33; 36, 38) projects in the direction of the brake disc (2) from a machined free surface (34) at the calliper back (10) of the brake calliper (8).

7. A disc brake (1) according to any one of the preceding claims, further having an adjustment device (19) that is inserted into a threaded tube (15, 17).

8. A brake calliper (8) of a disc brake (1) according to any one of the preceding claims, **characterised in that** the calliper back (10) of the brake calliper (8) has a transverse portion (13) that extends parallel to the brake disc (20) and at right angles to the brake disc axis (3), this transverse portion (13) having on the side facing the brake disc (20) a contact portion carrier (130) having at least one projection (30, 32) that takes the form of a circular-cylindrical dome having one contact surface (31, 33) of the least one pair of contact surfaces (31, 33; 36, 38).

9. A brake pad set of a disc brake (1) according to any one of claims 1 to 7, having at least one application-side brake pad (40) and at least one back-side brake pad (50'), this back-side brake pad (50') having at least one circular-cylindrical recess (35, 37) for receiving a projection (30, 31) that takes the form of a circular-cylindrical dome and corresponds to at least one circular-cylindrical recess (35, 37),
the brake pad set further comprising a pad retaining clip (25), the at least one application-side brake pad (40) and the at least one back-side brake pad (50') each being provided with a pad retaining spring (26, 27).

## Revendications

1. Frein (1) à disque, de préférence à actionnement par l'air comprimé, notamment pour un véhicule automobile, comportant un disque (2) de frein, ayant un axe (3) de disque de frein, un étrier (8) de frein, notamment un étrier coulissant, comprenant une partie (9) de serrage et un dos (10) d'étier, qui sont reliés par des tirants (11, 12), comportant en outre un dispositif de serrage, ayant de préférence un levier (22) tournant de frein et au moins une unité (14, 14') tubulaire filetée ayant au moins un tube (15, 16) fileté ayant un axe (14a, 14'a) médian, au moins deux garnitures (40, 50, 50') de frein ayant chacune un support (4, 6, 6') de garniture de frein, dans lequel parmi les garnitures (40, 50, 50') de frein une garniture (40) de frein du côté du serrage est associée à la partie (9) de serrage, et une garniture (50, 50') de frein du côté du dos est associée au dos (10) de l'étrier, dans lequel le support (6, 6') de garniture de frein de la garniture (50, 50') de frein du côté du dos et le dos (10) de l'étrier (8) de frein sont en contact par au moins une paire de surfaces (31, 33 ; 36, 38 ; 131, 132) de contact, dans lequel la une surface (31, 33) de contact de la au moins une paire de surfaces (31, 33 ; 36, 38) de contact est une surface frontale d'une saillie (30, 32), et en ce que l'autre surface (36, 38) de contact de la au moins une paire de surfaces (31, 33 ; 36, 38) de contact est une surface de fond d'un évidement (35, 37),
**caractérisé en ce que**
la saillie (30, 32) avec la une surface (31, 33) de contact de la au moins une paire de surfaces (31, 33 ; 36, 38) de contact et l'évidement (35, 37) avec l'autre surface (36, 38) de contact de la au moins une paire de surfaces (31, 33 ; 36, 38) de contact sont disposées coaxialement entre elles par rapport à leurs lignes médianes et coaxialement à l'axe (14a, 14'a) médian de la au moins une unité (14, 14') tubulaire filetée, et **en ce que**
la saillie (30, 32) avec la une surface (31, 33) de contact de la au moins une paire de surfaces (31, 33 ; 36, 38) de contact est en saillie d'une surface (34) libre du dos (10) de l'étrier, la surface (34) libre ne formant pas de surface de contact pour la garniture (50') de frein du côté du dos.

2. Frein (1) à disque suivant la revendication 1, **caractérisé en ce que** la saillie (30, 32) avec la une surface (31, 33) de contact de la au moins une paire de surface (31, 33 ; 36, 38) de contact et l'évidement (35, 37) avec l'autre surface (36, 38) de contact de la au moins une paire de surfaces (31, 33 ; 36, 38) de contact se correspondent entre elles et coopèrent entre elles à complémentarité de forme à l'état monté.

3. Frein (1) à disque suivant la revendication 1 ou 2, **caractérisé en ce que** la saillie (30, 32) avec la une surface (31, 33) de contact de la au moins une paire de surfaces (31, 33 ; 36, 38) de contact et l'évidement (35, 37) avec l'autre surface (36, 38) de contact de la au moins une paire de surfaces (31, 33 ; 36, 38) de contact ont une section transversale circulaire.

4. Frein (1) à disque suivant la revendication 1 ou 2, **caractérisé en ce que** la saillie (30, 32) avec la une surface (31, 33) de contact de la au moins une paire de surfaces (31, 33 ; 36, 38) de contact et l'évidement (35, 37) avec l'autre surface (36, 38) de contact de la au moins une paire de surfaces (31, 33 ; 36, 38) de contact ont une section transversale ovale ou polygonale.

5. Frein (1) à disque suivant l'une des revendications précédentes, **caractérisé en ce que** la saillie (30, 32) avec la une surface (31, 33) de contact de la au moins une paire de surfaces (31, 33 ; 36, 38) de contact vient de matière avec le dos (10) de l'étrier (8) de frein, et **en ce que** l'évidement (35, 37) avec l'autre surface (36, 38) de contact de la au moins une paire de la surface (31, 33 ; 36, 38) de contact est formée dans le support (6') de la garniture (50') de frein du côté du dos.

6. Frein (1) à disque suivant la revendication 5, **caractérisé en ce que** la saillie (30, 32) avec la une surface (31, 33) de contact de la au moins une paire de surfaces (31, 33 ; 36, 38) de contact dépasse, en direction du disque (2) de frein, sur le dos (10) de l'étrier (8) d'une surface (34) libre usinée.

7. Frein (1) à disque suivant l'une des revendications précédentes, comportant en outre un dispositif (19) de rattrapage, qui est inséré dans le tube (15, 17) fileté.

8. Etrier (8) d'un frein (1) à disque suivant l'une des revendications précédentes, **caractérisé en ce que** le dos (10) de l'étrier (8) de frein a une section (13) transversale, qui s'étend parallèlement au disque (2) de frein et à angle droit avec l'axe (3) du disque de frein, dans lequel la section (13) transversale a du côté, qui est tourné vers le disque (2) de frein, un support (130) de partie de contact ayant au moins une saillie (30, 32) sous la forme d'un mandrin cylindrique de section transversale circulaire avec la une surface (31, 33) de contact de la au moins une paire de surfaces (31, 33 ; 36, 38) de contact.

9. Ensemble de garnitures de frein d'un frein (1) à disque suivant l'une des revendications 1 à 7, comportant au moins une garniture (40) de frein du côté du serrage et au moins une garniture (50') de frein du côté du dos, dans lequel la garniture (50') de frein du côté du dos a au moins un évidement (35, 37) en forme de cylindre à section transversale circulaire de réception d'une saillie (30, 31), sous la forme d'un mandrin en forme de cylindre de section transversale circulaire, correspondant à l'évidement (35, 37) en forme de cylindre de section circulaire,
dans lequel l'ensemble de garnitures de frein comprend en outre un étrier (25) de maintien des garnitures, dans lequel la au moins une garniture (40) de frein du côté du serrage et la au moins une garniture (50') de frein du côté du dos sont pourvues chacune d'un ressort (26, 27) de maintien de garniture.
